# EUROPEAN PATENT SPECIFICATION

(11) **EP 1 049 623 B1**
(45) Date of publication and mention of the grant of the patent: **06.10.2004**
(21) Application number: 99905396.0
(22) Date of filing: 25.01.1999
(51) Int. Cl.: B64C 27/06, B64C 29/02

(54) **UNMANNED ROTOR CARRIED AERIAL VEHICLE**
UNBEMANNTER HUBSCHRAUBER
VEHICULE AERIEN SUPPORTE PAR ROTOR ET TELEPILOTE

(30) Priority: 28.01.1998 SE 9800231
(43) Date of publication of application: 08.11.2000
(73) Proprietor: Avia Adviser HB, 172 27 Sundbyberg (SE)
(72) Inventor: HJELTE, Fritz, S-172 65 Sundbyberg (SE)
(74) Representative: Rosenquist, Per Olof
(86) International application number: PCT/SE1999/000099
(87) International publication number: WO 1999/038769

(56) References cited:
- EP-A1- 0 661 206
- WO-A1-81/01542
- FR-A- 1 328 818
- FR-A- 1 604 722
- GB-A- 1 395 652

## Description

The present invention relates to a rotor carried aerial vehicle, comprising a propulsion unit having a drive motor, a carrier suspended from the propulsion unit and connected thereto via a cardan-like joint for permitting limited tilting of the propulsion unit relative to the carrier in two orthogonal directions corresponding to the roll and pitch directions of the vehicle and for preventing relative movement between the propulsion unit and the carrier in the yaw direction of the vehicle, and a control device for controlling the movement of the vehicle during flight.

A pilot commanded version of this type of rotor carried vehicle is disclosed in FR 1 604 722 and includes a pilot cabin suspended from a twin rotor propulsion unit via a cardan joint. Two hydraulic cylinders mechanically connect the propulsion unit to the cabin. The pilot operates the hydraulic cylinders to tilt the propulsion unit relative to the cabin to control the movement of the vehicle during flight.

Unmanned versions of this type of rotor carried aerial vehicles are used to an increasing extent primarily as platforms for reconnaissance, surveillance and surveying, and as communication data linking etc for both civilian and military missions. Such vehicles are provided with a suitable payload in the form of sensors for various tasks and communication equipment for transmitting sensor information to the receivers. There must also be flight state sensors for autonomous control of the aerial vehicle and for informing a ground based surveillance central via telemetering. When needed, control orders are normally sent from the surveillance central to the aerial vehicle for non-autonomous control of the latter.

The use of an unmanned aerial vehicle instead of a manned vehicle has the advantage that the life or health of air crews is not put at stake during dangerous missions. Furthermore, there is greater freedom when designing the aerial vehicle, in order to optimize the properties and performance of the vehicle, without need for taking crew demands into consideration. This freedom in design may be used to increase altitude and duration of flight of the vehicle or to provide small and relatively simple aerial vehicles. Therefore, the design of an unmanned aerial vehicle usually differs significantly from the design of a corresponding manned aerial vehicle.

The development of unmanned aerial vehicles (Unmanned Aerial Vehicles, UAV) has up till now been dominated by military needs. Three main types of UAV have been developed, namely UAV for high altitude and long operational time, UAV for medium altitude and medium long distances and UAV for close range operations and low altitudes. The present invention relates to UAV for the last mentioned main type. Such close range operations above all necessitates designing the aerial vehicle to be capable of taking off and landing vertically, so that the vehicle is not dependent on more or less distant air fields that may require long flights to and from the site of mission.

There are different types of known aerial vehicles that would be suited for developing UAV for close-range operations. A common type is the rotor carried aerial vehicle, such as the helicopter. Indeed, there are known UAV resembling helicopters. On the other hand there are UAV quite differing from helicopters, in spite of that the lifting force on the vehicle is generated by rotors. When designing such a rotor vehicle it is particularly important to obtain good hovering properties of the vehicle, i.e. when the aerial vehicle is kept still in the atmosphere. Good hovering properties, however, usually mean impaired high speed properties.

Most of the helicopters currently in use have a single rotor with a number of rotor blades. To counteract the turning moment of the rotor and to control the yaw of the helicopter usually a tail rotor is used, which provides a controllable yaw moment. The tail rotor, however, gives rise to certain disadvantages, such as increase in the energy consumption and a more complex design of the helicopter. The helicopter is operated in altitude and about the pitch and roll axes by a control mechanism for turning the rotor blades about their longitudinal axis, i.e. for changing the pitch of the respective rotor blades. This control mechanism comprises push rods for turning the rotor blades and a so called swash plate surrounding the rotor shaft. The positioning of the swash plate is controlled by two joy sticks in the pilot cabin. A disadvantage of such a control mechanism is that it is relatively complicated and sensitive to dirt, especially in small helicopters.

The object of the present invention is to provide an unmanned rotor carried aerial vehicle, which has a simple sturdy design and good hovering properties.

This object is obtained by the initially stated aerial vehicle, which is characterized in that that
- the aerial vehicle is unmanned,
- the propulsion unit includes only one single rotor driven by the drive motor for generating a substantially downwardly directed air flow,
- the carrier is mechanically connected to the propulsion unit only through the cardan-like joint to permit torque-free limited tilting of the propulsion unit relative to the carrier,
- the control device includes a plurality of adjustable control surfaces hinged to the propulsion unit and positioned so as to be acted upon by the substantially downwardly directed air flow from the single rotor,
- and the control surfaces are positioned under the centre of gravity of the vehicle such that pitch and roll moments on the vehicle generated by gusts against the rotor are counteracted by the action of the gusts on the control surfaces. Hereby the aerial vehicle is divided into two mutually movable modules, which results in the following advantages:

- Unlike a rigid connection between the two vehicle modules, which should require a substantially larger control moment for achieving a given tilting degree of the rotor, the cardan joint provides good control efficiency.
- Since the carrier is suspended from the cardan joint it tends to assume a stable orientation by gravity, which is suitable for payload comprising reconnaissance equipment (cameras and the like) that should operate in a stable state.
- Temporary forces or moments acting on the propulsion unit, induced by speed, gusts and control surface disturbances, do not substantially disturb the carrier, because of the fact that the carrier is connected to the propulsion unit via the cardan joint.
- The arrangement of control surfaces means that the rotor blades are not required to be turnable about their longitudinal axes with the aid of a swash plate or the like, for providing pitch and roll moments, but may be fixed to the shaft of the rotor, and there is no need for a tail rotor for providing yawing moments.

Preferably, the propulsion unit is pivotable about two horizontal axes extending perpendicular to each other through the cardan-like joint, whereby the propulsion unit is pivotable about one of said axes in the roll direction and about the other of said axes in the pitch direction.

The control principle comprising use of control surfaces is not new but has been disclosed previously. For example, reference may be made to the old US Patent No. 2 439 324 issued 1948. However, the experiences of such a control principle do not seem to have been positive, probably because of that suitable places on a helicopter for the control surfaces are diffidult to establish. Probably, the reason for this is that the relatively strong moments that are required for controlling the aerial vehicle cannot be obtained without using unreasonably large control surfaces. To avoid such large control sufaces, the moment arms of the control surfaces to the centre of gravity of the aerial vehicle must be relatively long. In consequence, the design of an aerial vehicle controlled in accordance with the above-described control principle is quite different from the normal design of helicopters.

In the aerial vehicle of the present invention; an efficient moment control is possible to achieve by positioning the components of the propulsion unit, such as the drive motor, as close to the rotor blades as possible. Further, all fuel, payload and auxiliary equipment, which do not need to be elsewhere, are placed in the carrier, which is suspended from the propulsion unit via the cardan joint. Since the control surfaces are rigidly connected to the propulsion unit the advantage is obtained that the control surfaces can easier tilt this in pitch and roll directions, than if the carrier were rigidly connected to the propulsion unit. An important result of the above described arrangement is that the payload in the carrier will remain in a relatively stable position when hovering and when flying in a non-accelerated manner. Since the carrier and the propulsion unit are rigidly connected to each other in the yawing direction by means of the cardan joint, the yawing control of the propulsion unit also provides yawing control of the carrier.

A drawback to fixed rotor blades in a conventional helicopter is that rotor moments induced by speed and wind are transferred to the body of the helicopter and give rise to undesirable dynamic loads. This drawback resulted in the development of rotor blades with variable pitch already in the earliest helicopters. The carrier in the aerial vehicle according to the invention, however, is isolated from influences of such dynamic loads by the cardan-like suspension of the carrier.

Experience has shown that hovering helicopters at a low altitude are particularly sensitive to gusts, which makes it difficult to retain the desired orientation and position of the helicopter. The reason for the gusts influencing the helicopter is in the first place that the gusts generate forces acting on the rotor. For instance, horizontal gusts generate horizontal forces on the rotor, which turns and also laterally moves the helicopter.

Of course, the same problem exists in rotor carried UAV and makes the use thereof for instance reconnaissance more difficult. By the control surface arrangement according to the embodiment described above, this type of gust influence can be reduced. The horizontal forces, caused by gusts, attack the UAV in the rotor blade plane of the rotors, i.e. above the centre of gravity of the aerial vehicle. However, the gusts also give rise to horizontal forces on the control surfaces. By suitable positioning of the control surfaces, the horizontal forces on the control surfaces can attack the aerial vehicle under its centre of gravity, so that the aerial vehicle is stabilized. The effect of these forces caused by gusts may therefore be neutralized by a suitable choice of the positions and sizes of the control surfaces. Alternatively or as a complement, a band-shaped rim may surround the control surfaces. The rim may also be utilized for attaching hinges of the control surfaces and for protecting the control surfaces.

The control surfaces are placed as far downstream of'the rotor blades as is practicably suitable to obtain as long moment arms as possible. Such a moment arm may comprise a bar or any other rigid, elongated structure, which at one end is hinged to its associated control surface and at its other end is attached to the propulsion unit. Normally, two control surfaces are used for roll control and two further control surfaces are used for pitch control, the four control surfaces being mounted in a cross arrangement.

Suitably, the control surfaces are tilted with the aid of servo devices. The minimum number of such servo devices is two (for roll and pitch control, respectively). With four servo devices (one servo device per control surface) the yawing control may be superposed the roll and pitch control.

The invention will now be described in more detail with reference to the accompanying drawings, in which

Figure 1 schematically shows a side view of an unmanned rotor carried aerial vehicle according to the invention, comprising a lifting unit and a carrier suspended therefrom, whereby for the sake of clarity any control device for controlling the flight of the vehicle is not shown, and

Figure 2 shows the vehicle in Fig. 1 provided with a control device for controlling the flight of the vehicle, whereby for the sake of clarity the carrier is omitted.

In the figures, identical components are denoted by the same reference numerals.

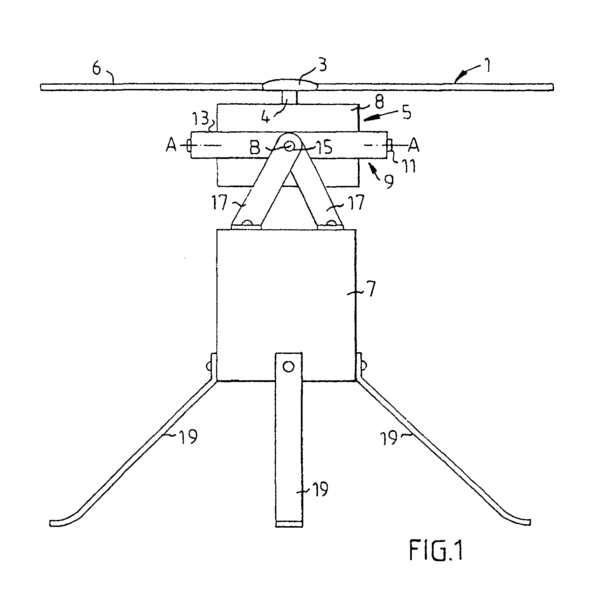

Figure 1 schematically shows an unmanned rotor carried aerial vehicle (UAV) according to the invention, comprising two main modules, namely a propulsion unit 5 and a carrier 7 suspended from the propulsion unit 5. The propulsion unit 5 comprises a single rotor 1 having rotor blades 6 rigidly fixed to a rotor hub 3 and a rotor shaft 4 rigidly fixed to the hub 3. The propulsion unit 5 further comprises a drive motor, such as an combustion engine (not shown), which is in drivingly engagement with the rotor shaft 4 via a reduction gear (not shown). The drive motor and the reduction gear are housed in a housing 8.

The carrier 7, which contains suitable equipment, for instance reconnaissance cameras and a fuel tank, is articulatedly connected to the propulsion unit 5 by an articulation in the form of a cardan joint 9. The cardan joint 9 comprises two horizontal pivot pins 11 attached to the housing 8 on mutual sides thereof. A cardan ring 13 surrounds the housing 8 and is pivoted on the pivot pins 11, so that the cardan ring 13 is pivotable about a horizontal axis A-A extending through the pivot pins 11, when the vehicle is in a state of equilibrium. Two further horizontal pivot pins 15 are attached to the cardan ring 13 on mutual sides thereof and extend perpendicular to the axis A-A. Two pairs of elongated struts 17, which are rigidly fixed to the carrier 7 by any suitable joints not described in detail, for instance rivet joints, are pivoted on the two pivot pins 15, respectively, so that the carrier 7 is pivotable about a horizontal axis B-B extending through the pivot pins 15 perpendicular to the axis A-A. As appears from figure 1 the two struts 17 on each pivot pin 15 form an acute angle to each other, but the skilled man will of course realize that the means for interconnecting the cardan joint 9 and the carrier 7 may be designed in any optional manner. In a state of rest the carrier 7 is supported by an under-carriage, here in the form of a plurality of legs 19, attached to the lower end of the carrier 7.

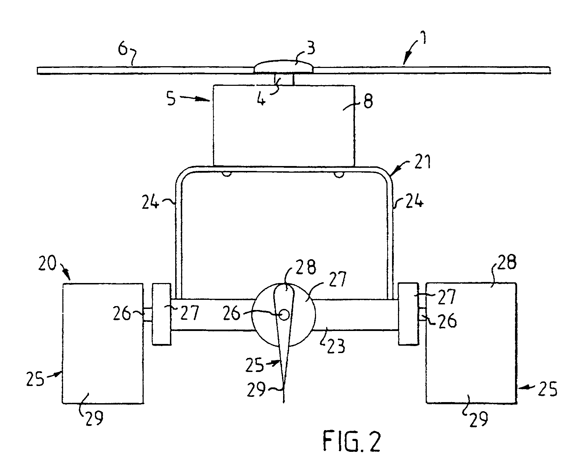

Figure 2 schematically shows a control device 20 comprising a substantially U-shaped clamp 21 attached to the lower part of the housing 8 and four control surfaces 25 carried by the clamp 21. The legs 24 of the U-shaped clamp 21 are spaced apart to permit the propulsion unit 5 to tilt relative to the carrier 7 without interference between the clamp 21 and the carrier 7 during normal flight conditions. To the lower part of the clamp 21 a horizontal holder ring 23 is rigidly fixed, on which the four control surfaces 25 are tiltably arranged and evenly distributed around the holder ring 23. Each control surface 25 has a tapering cross-section, so that the control surface 25 has a relatively thick leading end 28 and a relatively thin trailing end 29, as seen in the direction of the air flow generated by the rotor 1. In a basic position the control surfaces 25 are vertically oriented with the leading ends 28 of the control surfaces 25 directed upwardly. The four control surfaces 25 are hinged on four horizontal shafts 26, respectively, protruding outwardly from the holder ring 23 and are tiltable by servo devices 27 for providing desired control moments on the propulsion unit 5. Of course, the control surfaces 25 are positioned to be acted upon by the downwardly directed air flow generated by the rotor blades 6 during operation.

In the embodiments according to Figs. 1 and 2 the propulsion unit 5 and the carrier 7 are articulated by means of an articulation in the form of the cardan joint 9. Of course, the skilled man would realize that any suitable type of a cardan-like joint may be used for providing the desired versatile mobility between the propulsion unit 5 and the carrier 7, provided that such a cardan-like joint has two degrees of freedom (roll and pitch) and that it prevents relative displacement between the propulsion unit 5 and the carrier 7 in the yaw direction.

## Claims

1. A rotor carried aerial vehicle, comprising a propulsion unit (5) having a drive motor, a carrier (7) suspended from the propulsion unit (5) and connected thereto via a cardan-like joint (9) for permitting limited tilting of the propulsion unit relative to the carrier in two orthogonal directions corresponding to the roll and pitch directions of the vehicle and for preventing relative movement between the propulsion unit and the carrier in the yaw direction of the vehicle, and a control device (25,27) for controlling the movement of the vehicle during flight, **characterized in that**
- the aerial vehicle is unmanned,
- the propulsion unit (5) includes only one single rotor (1) driven by the drive motor for generating a substantially downwardly directed air flow,
- the carrier (7) is mechanically connected to the propulsion unit (5) only through the cardan-like joint (9) to permit torque-free limited tilting of the propulsion unit relative to the carrier,
- the control device (25,27) includes a plurality of adjustable control surfaces (25) hinged to the propulsion unit and positioned so as to be acted upon by the substantially downwardly directed air flow from the single rotor,
- and the control surfaces (25) are positioned under the centre of gravity of the vehicle such that pitch and roll moments on the vehicle generated by gusts against the rotor (1) are counteracted by the action of the gusts on the control surfaces.

2. An aerial vehicle according to claim 1, **characterized in that** the propulsion unit (5) is pivotable about two horizontal axes (A-A, B-B, respectively) extending perpendicular to each other through the cardan-like joint (9).

3. An aerial vehicle according to claim 1 or 2, **characterized in that** the rotor (1) comprises a rotor shaft (4), and that the number of the control surfaces (25) are four, the control surfaces being symmetrically positioned relative to the rotor shaft.

4. An aerial vehicle according to claim 3, **characterized by** at least one servo device (27) for controlling the attack angles of the control surfaces (25).

5. An aerial vehicle according to claim 3 or 4, **characterized in that** the control surfaces (25) are surrounded by a band-shaped rim, which is positioned under the centre of gravity of the vehicle such that pitch and roll moments on the aerial vehicle generated by gusts against the rotor (1) are counteracted by the action of the gusts on the rim.

6. An aerial vehicle according to any one of claims 1-5, **characterized in that** the rotor (1) comprises a rotor shaft (4) and a number of elongated rotor blades rigidly connected to the rotor shaft.

## Patentansprüche

1. Von einem Rotor getragenes Luftfahrzeug mit einer einen Antriebsmotor aufweisenden Antriebseinheit (5), einem von der Antriebseinheit (5) herabhängenden Träger (7), der mit dieser über ein kardanartiges Gelenk (9) verbunden ist, um ein begrenztes Kippen der Antriebseinheit in bezug auf den Träger in zwei orthogonale Richtungen entsprechend den Roll- und Nickrichtungen des Flugzeugs zu ermöglichen und eine Relativbewegung zwischen der Antriebseinheit und dem Träger in der Gierrichtung des Fahrzeugs zu verhindern, und einer Steuervorrichtung (25, 27) zum Steuern der Bewegung des Fahrzeugs während des Flugs, **dadurch gekennzeichnet, daß**
- das Luftfahrzeug unbemannt ist,
- die Antriebseinheit (5) nur einen einzigen Rotor (1) umfaßt, der vom Antriebsmotor angetrieben ist, um eine im wesentlichen abwärts gerichtete Luftströmung zu erzeugen,
- der Träger (7) mechanisch mit der Antriebseinheit (5) nur durch das kardanartige Gelenk (9) verbunden ist, um ein drehmomentfreies Kippen der Antriebseinheit in bezug zum Träger zu ermöglichen,
- die Steuervorrichtung (25, 27) mehrere einstellbare Steuerflächen (25) aufweist, die an der Antriebseinheit angelenkt und derart angeordnet sind, daß die im wesentlichen nach unten gerichtete Luftströmung des einzigen Rotors auf diese wirkt,
- und die Steuerflächen (25) unter dem Schwerpunkt des Fahrzeugs derart positioniert sind, daß durch Luftstöße gegen den Rotor (1) erzeugten, auf das Fahrzeug wirkenden Roll- und Nickmomenten durch die Wirkung von auf die Steuerflächen einwirkenden Luftstößen entgegengewirkt wird.

2. Luftfahrzeug nach Anspruch 1, **dadurch gekennzeichnet, daß** die Antriebseinheit (5) um zwei horizontale Achsen (A-A bzw. B-B) schwenkbar ist, welche sich senkrecht zueinander durch das kardanartige Gelenk (9) erstrecken.

3. Luftfahrzeug nach Anspruch 1 oder 2, **dadurch gekennzeichnet, daß** der Rotor (1) eine Rotorwelle (4) aufweist, und daß die Anzahl der Steuerflächen (25) vier beträgt, wobei die Steuerflächen symmetrisch relativ zur Rotorwelle angeordnet sind.

4. Luftfahrzeug nach Anspruch 3, **gekennzeichnet durch** wenigstens eine Servovorrichtung (27) zum Steuern der Angriffswinkel der Steuerflächen (25).

5. Luftfahrzeug nach Anspruch 3 oder 4, **dadurch gekennzeichnet, daß** die Steuerflächen (25) von einem bandförmigen Rand umgeben sind, welcher unter dem Schwerpunkt des Fahrzeugs derart angeordnet ist, so daß durch Luftstöße gegen den Rotor (1) erzeugten, auf das Fahrzeug wirkenden Roll- und Nickmomenten durch die Wirkung von auf den Rand einwirkenden Luftstößen entgegengewirkt wird.

6. Luftfahrzeug nach einem der Ansprüche 1-5, **dadurch gekennzeichnet, daß** der Rotor (1) eine Rotorwelle (4) und eine Anzahl länglicher Rotorblätter aufweist, die starr mit der Rotorwelle verbunden sind.

## Revendications

1. Véhicule aérien supporté par un rotor, comprenant une unité de propulsion (5) présentant un moteur d'entraînement, un plateau porteur (7) suspendu depuis l'unité de propulsion (5) et relié à celle-ci par l'intermédiaire d'un joint ressemblant à un cardan (9) pour permettre un basculement limité de l'unité de propulsion par rapport au plateau porteur dans deux directions perpendiculaires correspondant aux directions de roulement et de tangage du véhicule et pour empêcher le mouvement relatif entre l'unité de propulsion et le plateau porteur dans la direction de lacet du véhicule, et un dispositif de commande (25, 27) pour commander le mouvement du véhicule pendant le vol, **caractérisé en ce que**
- le véhicule aérien est sans pilote,
- l'unité de propulsion (5) ne comprend seulement qu'un seul rotor (1) entraîné par le moteur d'entraînement destiné à générer un flux d'air dirigé sensiblement vers le bas,
- le plateau porteur (7) est relié mécaniquement à l'unité de propulsion (5) seulement à travers le joint ressemblant à un cardan (9) pour permettre un basculement limité à couple libre de l'unité de propulsion par rapport au plateau porteur,
- le dispositif de commande (25, 27) comprend une pluralité de surfaces de commande ajustables (25) articulées à l'unité de propulsion et positionnées de manière à être actionnées par le flux d'air dirigé sensiblement vers le bas depuis le rotor unique,
- et les surfaces de commande (25) sont positionnées sous le centre de gravité du véhicule de telle sorte que les moments de tangage et de roulement sur le véhicule générés par des rafales contre le rotor (1) sont neutralisés par l'action des rafales sur les surfaces de commande.

2. Véhicule aérien selon la revendication 1, **caractérisé en ce que** l'unité de propulsion (5) peut pivoter autour de deux axes horizontaux (A - A, B - B, respectivement) s'étendant perpendiculairement l'un par rapport à l'autre à travers le joint ressemblant à un cardan (9).

3. Véhicule aérien selon la revendication 1 ou 2, **caractérisé en ce que** le rotor (1) comprend un arbre rotor (4), et **en ce que** le nombre des surfaces de commande (25) est de quatre, les surfaces de commande étant positionnées symétriquement par rapport à l'arbre rotor.

4. Véhicule aérien selon la revendication 3, **caractérisé par** au moins un servo-dispositif (27) destiné à commander les angles d'attaque des surfaces de commande (25).

5. Véhicule aérien selon la revendication 3 ou 4, **caractérisé en ce que** les surfaces de commande (25) sont entourées par une rive en forme de bande, qui est positionnée sous le centre de gravité du véhicule de telle sorte que les moments de tangage et de roulement sur le véhicule aérien générés par les rafales contre le rotor (1) sont neutralisés par l'action des rafales sur la rive.

6. Véhicule aérien selon l'une quelconque des revendications 1 à 5, **caractérisé en ce que** le rotor (1) comprend un arbre rotor (4) et un nombre de pales de rotor allongées reliées de manière rigide à l'arbre rotor.
